Europäisches Patentamt

(19) European Patent Office

Office européen des brevets

(11) Numéro de publication: **0 012 077**
**B1**

(12) **FASCICULE DE BREVET EUROPEEN**

(45) Date de publication du fascicule du brevet: **20.01.82**

(51) Int. Cl.³: **B 60 P 3/34**

(21) Numéro de dépôt: **79400919.1**

(22) Date de dépôt: **27.11.79**

(54) Caravane pliante rigide à dépliage assisté.

(30) Priorité: 28.11.78 FR 7833584
15.05.79 FR 7912273

(43) Date de publication de la demande:
11.06.80 Bulletin 80/12

(45) Mention de la délivrance du brevet:
20.01.82 Bulletin 82/3

(84) Etats contractants désignés:
AT CH DE LU NL SE

(56) Documents cités:
FR - A - 2 263 907
FR - A - 2 284 480
FR - A - 2 296 545
FR - A - 2 355 692

(73) Titulaire: ESTEREL CARAVANES
159, rue du Général de Gaulle
F-76670 Le Houlme (FR)

(72) Inventeur: Dufrancatel, Michel
380, allée Clair Bois
F-76380 Bois Guillaume (FR)

(74) Mandataire: Derambure, Christian
Cabinet BUGNION ASSOCIES SARL 116,
boulevard Haussmann
F-75008 Paris (FR)

Courier Press, Leamington Spa, England.

## Caravane pliante rigide à dépliage assisté

L'invention concerne une caravane pliante rigide à dépliage assisté et, plus particulièrement, les modes de montage de ses organes élastiques d'assistance.

Les caravanes pliantes rigides à dépliage assisté sont connues et comprennent un fond porté par un châssis limité par un plancher et quatre panneaux inférieurs substantiellement verticaux respectivement frontaux (avant et arrière) et latéraux (droite et gauche); quatre panneaux supérieurs respectivement frontaux (avant et arrière) et latéraux (droite et gauche), mobiles à pivotement autour d'axes horizontaux situés sur le bord libre supérieur des panneaux inférieurs, placés soit substantiellement horizontalement dans l'ouverture supérieure du fond, soit substantiellement verticalement dans les prolongements des panneaux inférieurs correspondants, respectivement lorsque la caravane est pliée ou totalement dépliée; un toit associé aux panneaux supérieurs frontaux au moyen notamment de galets d'axes correspondants aux bords horizontaux supérieurs des panneaux frontaux supérieurs, coopérant avec des glissières du toit lequel repose horizontalement soit sur le fond soit sur les panneaux supérieurs lorsque la caravane est pliée ou totalement dépliée; au moins un et généralement plusieurs organes élastiques d'assistance unidirectionnels tels que des vérins, par exemple pneumatiques, articulés chacun au fond et, à un panneau supérieur, notamment frontal, en vue de solliciter en permanence ce panneau en rotation dans le sens du dépliage de la caravane.

Dans une première forme de réalisation (brevet français n° 2.284.480) les organes d'assistance sont placés en permanence et en totalité à l'extérieur de la caravane et, au moins lorsque celle-ci est dépliée, de part et d'autre du plan horizontal défini par les axes d'articulation des panneaux supérieurs latéraux appelés par la suite plan P. Cette disposition permet de placer les organes d'assistance avec des inclinaisons propres à leur conférer l'efficacité maximale mais en contrepartie ceux-ci sont visibles de l'extérieur de la caravane et éventuellement sujets aux chocs. En variante, (brevet français 2.296.545) les organes d'assistance sont partiellement logés dans une boîte rapportée en saillie sur le fond de la caravane, avec les inconvénients que cela comporte.

Dans une seconde forme de réalisation, les organes d'assistance sont placés en permanence et en totalité à l'intérieur de la caravane c'est-à-dire dans le volume déterminé par le fond, les panneaux supérieurs et le toit. Trois modes d'exécution de cette forme de réalisation ont été proposées.

Dans le premier mode d'exécution (brevet français 2.355.692), les organes d'assistance sont placés en totalité et en permanence, au-dessus du plan P et articulés au fond au moyen de pièces formant chaises coudées en L pour ne pas gêner le pivotement des panneaux latéraux une fois les panneaux frontaux relevés. Ce mode d'exécution est donc complexe, coûteux, inesthétique (puisque les organes d'assistance sont situés en regard des panneaux supérieurs) et risqué car si les panneaux supérieurs frontaux ne sont pas dans leur position correcte les panneaux supérieurs latéraux peuvent interférer avec les organes d'assistance.

Dans le deuxième mode d'exécution, les organes d'assistance sont placés de part et d'autre du plan P. Pour permettre alors le pivotement de ces panneaux, l'une au moins des articulations de chaque organe d'assistance est amovible ce qui a l'inconvénient d'être inesthétique, d'emploi malaisé et peu fiable.

Dans le troisième mode d'exécution (brevet français 2.263.907), les organes d'assistance sont placés en permanence et en totalité, au dessus du plan P. Pour pouvoir pivoter les panneaux latéraux supérieurs sont reliés au fond au moyen de charnières à axes décalés ce qui a l'inconvénient d'être inesthétique, coûteux et peu satisfaisant.

Dans les trois modes d'exécution un espace de passage de l'organe d'assistance est ménagé entre chaque chant vertical des panneaux supérieurs latéraux et la face interne du panneau supérieur frontal le plus proche. Cet espace est masqué, lorsque la caravane est dépliée au moyen d'un tasseau fixé impérativement au panneau supérieur frontal, sur sa face interne et le long de son chant. Il est donc également nécessaire de ménager un espace de logement de ces tasseaux lorsque la caravane est repliée. Par exemple, les bords supérieurs des panneaux inférieurs frontaux sont placés au-dessus de ceux des panneaux inférieurs latéraux et le fond comporte à l'endroit de son ouverture un décrochement inesthétique, créant des problèmes d'étanchéité et nécessitant que le toit soit pourvu d'un bord vertical tombé formant bandeau masquant ce décrochement. Ce bord tombé est également rendu nécessaire pour rigidifier le toit dont l'assise sur le fond est insuffisante. Cet alourdissement du toit impose des organes d'assistance plus puissants et créé de nombreux autres problèmes tant de construction que d'utilisation de la caravane.

Ainsi, les formes de réalisation des caravanes pliantes rigides à dépliage assisté ne sont guère satisfaisants en ce qui concerne le montage des organes d'assistance.

L'invention vise à remédier à ces inconvénients et propose une caravane pliante à dépliage assisté au moyen d'organes élastiques d'assistance unidirectionnels, dans laquelle les organes élastiques d'assistance sont placés non pas à l'extérieur ou à proprement parler à l'intérieur de la caravane, mais dans des logements ou gorges prévus à cet effet, dans l'épaisseur même des panneaux de la caravane, masqués vers l'extérieur et l'intérieur.

Les autres caractéristiques de l'invention seront bien comprises grâce à la description qui suivra en référence aux dessins annexés dans lesquels:

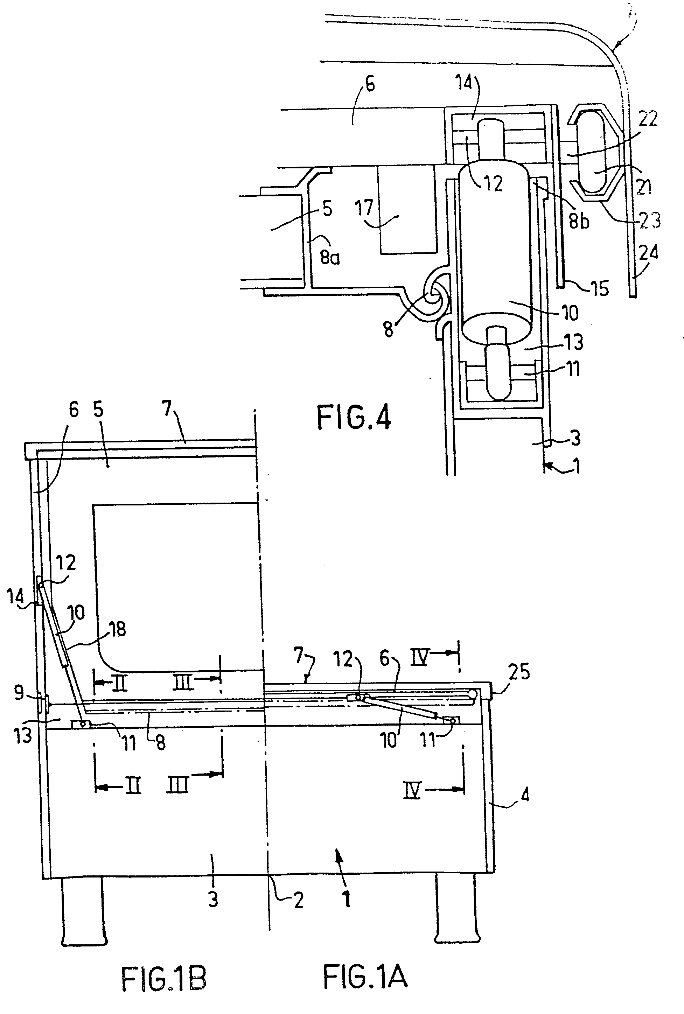

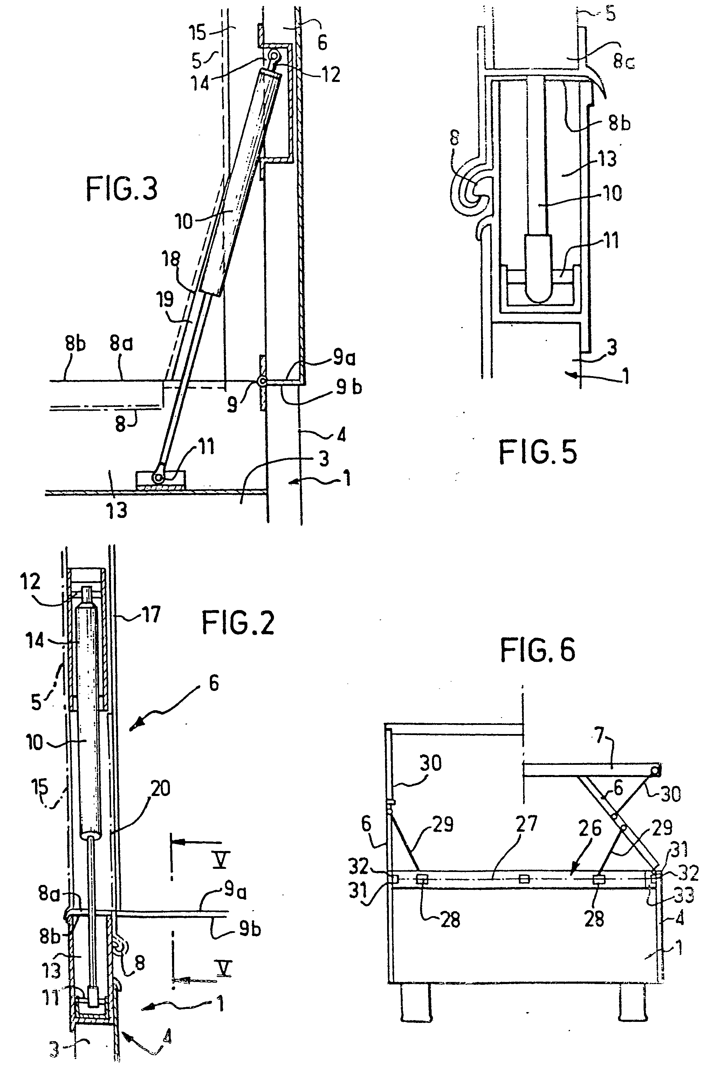

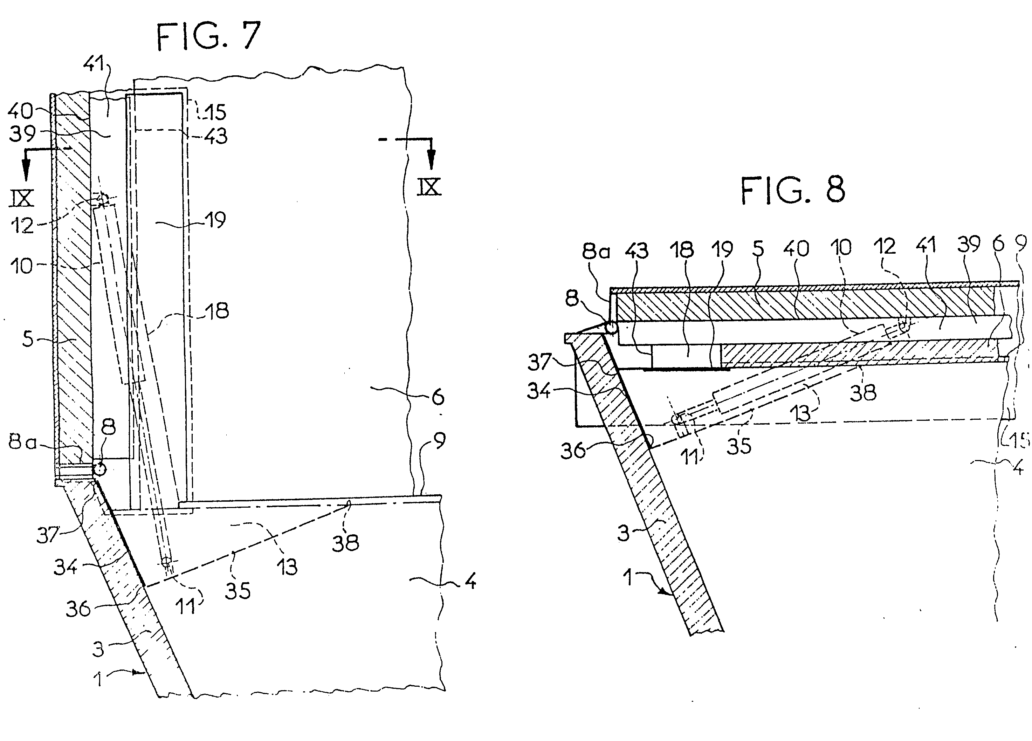

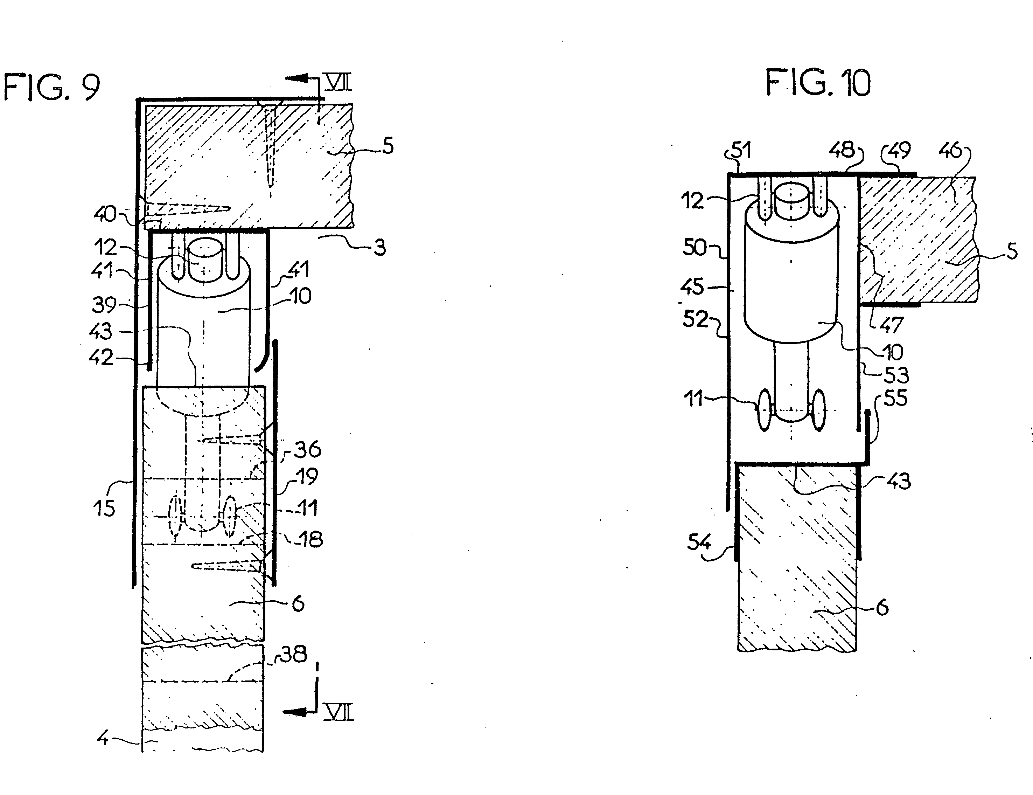

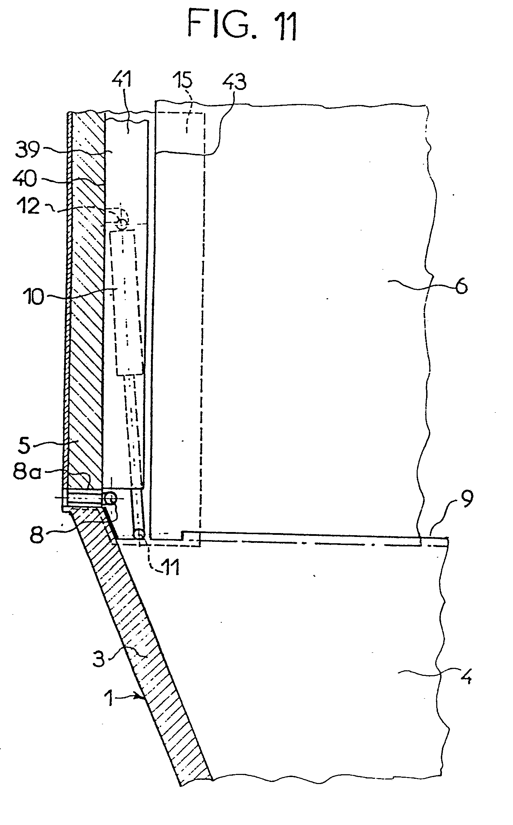

La figure 1A et la figure 1B sont deux demi-vues partielles de la caravane respectivement pliée et dépliée; la figure 2 est une vue à plus grande échelle, en coupe suivant la ligne II—II de la figure 1B; la figure 3 est une vue à plus grande échelle en coupe suivant la ligne III—III de la figure 1B; la figure 4 est une vue en coupe à plus grande échelle, suivant le ligne IV—IV de la figure 1A; la figure 5 est une vue à plus grande échelle, en coupe suivant la ligne V—V de la figure 2; la figure 6 est une vue schématique correspondant à une variante de réalisation de la commande du dépliage de la caravane; la figure 7 est une vue schématique, partielle, en coupe suivant un plan vertical selon la ligne VII—VII de la figure 9 médian d'une caravane suivant l'invention, dépliée; la figure 8 est une vue schématique, partielle en coupe suivant un même plan vertical médian d'une caravane suivant l'invention pliée; la figure 9 est une vue schématique, en coupe, suivant un plan horizontal et la ligne IX—IX de la figure 7, la caravane étant dépliée; la figure 10 est une vue schematique, en coupe suivant un plan horizontal d'une variante d'exécution de la caravane illustrée sur la figure 9; la figure 11 est une vue schématique en coupe par un plan vertical d'une variante de la figure 7.

La caravane pliante rigide à dépliage assisté suivant l'invention comprend un fond 1, porté par un châssis à attelage, limité par un plancher 2, normalement horizontal, et quatre panneaux inférieurs substantiellement verticaux respectivement frontaux 3 (avant et arrière) et longitudinaux 4 (droite et gauche); quatre panneaux supérieurs respectivement frontaux 5 (avant et arriére) et longitudinaux 6 (droite et gauche) et un toit 7, mobile, associé aux panneaux supérieurs.

Le fond 1, le plancher 2, les panneaux 3, 4, 5, 6 et le toit 7 sont rigides et réalisés en tout matériau approprié notamment bois, métal, matière plastique, etc.

Chaque panneau supérieur frontal 5 est articulé par son bord libre horizontal inférieur 8a au bord libre horizontal 8b du panneau frontal inférieur correspondant 3, donc est mobile à pivotement autour d'un axe d'articulation.

Chaque panneau supérieur longitudinal 6 est articulé par son bord libre inférieur 9a au bord libre horizontal supérieur 9b du panneau inférieur longitudinal 4 correspondant, donc est mobile à pivotement autour d'un axe d'articulation 9.

Les panneaux supérieurs 5, 6 sont placés soit substantiellement verticalement et dans le prolongement des panneaux inférieurs correspondants 3, 4 soit substantiellement horizontalement, dans l'ouverture supérieure du fond 1 lorsque la caravane est respectivement totalement dépliée et pliée.

Les bords 8b, 9b, des panneaux inférieurs 3 et 4 sont coplanaires c'est-à-dire que le fond 1 est dépourvu d'échancrure à l'endroit de son ouverture. En combinaison et lorsque la caravane est pliée, les panneaux supérieurs longitudinaux 6 sont coplanaires et placés en appui sur les panneaux supérieurs frontaux 5 également coplanaires. A cet effet, les axes 9 sont situés au moins sensiblement dans le plan horizontal défini par les bords libres horizontaux supérieurs 8b, 9b et les axes 8 placés dans un plan horizontal situé à un niveau légèrement inférieur de manière que l'écartement entre ces deux plans corresponde à l'épaisseur permettant de loger les panneaux supérieurs frontaux 5 en dessous des panneaux supérieurs longitudinaux 6. A cet effet, on peut utiliser pour réaliser l'articulation entre un panneau supérieur frontal 5 et un panneau inférieur frontal 3 une articulation à axe déporté ou similaire.

La caravane comporte également au moins un et, généralement, plusieurs organes élastiques d'assistance unidirectionnels 10, notamment des vérins, par exemple pneumatiques, articulés chacun d'une part au fond 1, notamment à un panneau frontal inférieur 3 et, d'autre part, à un panneau supérieur, notamment longitudinal 6, respectivement autour d'axes d'articulation 11, 12, horizontaux et paralleles, en vue de solliciter en permanence le panneau supérieur longitudinal 6 dans le sens du dépliage de la caravane. Il est prévu notamment deux organes 10 par panneau 6, mais l'invention s'applique à un nombre différent d'organes 10, et également, à une association différente des organes 10 avec les panneaux 4 et 5.

Les organes 10 ne sont pas placés à l'extérieur, ni à proprement parler, à l'intérieur de la caravane mais dans la "zone frontière" intermédiaire définie par les panneaux même 3, 4, 5, 6 afin d'éliminer les inconvénients inhérents aux modes de montage connus.

A cet effet, dans une première forme d'exécution possible est ménagé dans le chant horizontal supérieur de chaque panneau notamment frontal 3 auquel est articulé un organe 10, un logement ou gorge 13, de profondeur suffisante auquel est associé et dans lequel est susceptible d'être placé en totalité l'organe 10 lorsque la caravane est pliée. Ce logement ou gorge 13 est réalisé soit sous la forme d'une zone creusée à cet effet dans le panneau inférieur notamment 3, soit préférentiellement au moyen d'un profilé de forme approprié constituant le bord libre horizontal supérieur dudit panneau notamment 8b. Plusieurs variantes de réalisation seront décrites par la suite. Le logement ou gorge 13 permet de placer l'organe 10 en cas d'inutilisation et autorise son accès en cas de besoin.

Les axes d'articulation 11, 12 sont assujettis respectivement au fond 1 et aux panneaux supérieurs notamment 6 par tout organe approprié notamment sous forme de chape. Pour que l'organe 10 ait sont efficacité maximale, l'axe 11 est placé de préférence dans le fond même du logement ou gorge 13, c'est-à-dire, d'une part écarté vers le bas par rapport au plan des axes 9 et d'autre part déportés vers l'intérieur de la caravane en direction d'un plan de symétrie vertical médian de celle-ci. Ainsi, l'axe 11 est écarté transversalement de l'axe 9 voisin. L'axe 12 est situé sur un panneau 6 suffisamment à l'écart de l'axe 9 correspondant. Pour éviter que l'organe 10 ne saille excessivement de la face interne du panneau supérieur longitudinal 6 à l'endroit de la chape associée à l'axe 12, il est prévu, préférentiellement, que l'axe 12 est placé dans un logement 14 creusé à cet effet, localement, dans le panneau longitudinal supérieur 6 à partir de sa face interne.

Le logement ou gorge 13 s'étend sur tout ou seulement partie du chant d'un panneau inférieur frontal 3 entre les deux panneaux 4 opposés.

Pour permettre le mobilité des panneaux supérieurs frontaux 5, il est prévu, de façon connue en soi, que l'écartement entre les deux chants normalement verticaux d'un panneau 5 est plus petit que l'écartement entre les faces internes des deux panneaux 6. Le jeu existant ainsi est masqué extérieurement, de façon connue, grâce aux ailes 15 dont sont pourvus les panneaux 6. Ces ailes 15 sont deux à deux coplanaires, dans le plan des chants verticaux des panneaux 6 et dirigées vers l'intérieur de la caravane et sont réalisées notamment grâce à la fixation aux panneaux 6 de cornières ou similaires. Ce jeu est masqué aussi intérieurement au moyen notamment de tasseaux 17 ou similaires rigidement fixés aux panneaux 6.

Chaque angle inférieur d'un panneau supérieur frontal 5 est coupé par un chanfrein 18 ce qui constitue un espace libre pour le passage des organes 10. Les trous correspondant à ces chanfreins 18 sont masqués extérieurement par des plaques d'angle triangulaires 19 faisant partie intégrante ou rapportées sur les ailes 15 et, intérieurement, par des plaques d'angle 20, de même type, fixées aux panneaux 5.

Le toit 7 est dans la forme d'exécution décrite ici associé aux panneaux supérieurs longitudinaux 6 et non pas aux panneaux supérieurs frontaux 5, comme il est connu. Cette association est réalisée, notamment au moyen de galets 21 montés à pivotement sur les panneaux 6 autour d'axes 22 au voisinage des chants horizontaux supérieurs de ces panneaux coopérant avec des glissières 23 complémentaires fixées à un bord tombé frontal 24 du toit 7. Cette disposition a pour effet que d'une part l'augmentation de l'encombrement résultant des galets 21 et glissières 23 est réalisé sur la caravane sur ses parties frontales avant et arrière et non sur les parties longitudinales correspondant à son gabarit routier et d'autre part l'espace libre à l'intérieur de la caravane peut être augmenté et utilisé utilement. Le chant inférieur horizontal du bord tombé longitudinal 25 est en appui sur le bord supérieur 9b des panneaux 4 (contrairement à l'état connu de la technique), d'où un appui important du toit 7 sur le fond 1 permettant d'alléger le toit 7 et les organes 10. Egalement, les panneaux 6 peuvent, lorsque la caravane est pliée être placés l'un à côté de l'autre. A cet effet, la hauteur des panneaux supérieurs 5, 6 est au plus égale à la moitié de la largeur du fond 1 mesurée entre les axes 9. Les panneaux 5 ne sont donc plus porteurs et peuvent être utilisés à toute fin spécifique. Par exemple, les panneaux 5 sont susceptibles d'être conçus pour pouvoir être rabattus sur toute leur largeur de la même manière qu'un vasistas pour favoriser la circulation de l'air. Naturellement, cette association particulière du toit 7 aux panneaux 6 n'est en rien limitative et l'invention concerne également le cas où le toit 7 est associé aux panneaux 5.

Sur la figure 6 est représentée une variante d'une caravane du type de celle décrite, comprenant des moyens d'actionnement des panneaux 6 se présentant notamment sous la forme de vérins à vis 26 placés dans les logements ou gorges 13, pourvus de deux pas de vis en sens opposés 27 avec chacun desquels coopèrent deux écrous à pas contraire 28, sur chacun desquels est articulée une biellette 29, articulée à son autre extrémité à un panneau 6 notamment dans le logement 14. Les biellettes 29 peuvent donc être placées lorsque la caravane est pliée, dans les logements ou gorges 13. Des biellettes d'équilibrage 30, articulées d'une part aux panneaux 6 et, d'autre part, au toit 7, permettent d'assurer le maintien du toit 7 en équilibre horizontal permanent. Au moyen notamment d'un renvoi d'angle 31 et d'un arbre 32, les deux vérins à vis 26 peuvent être reliés cinématiquement à un moyen d'entrainement 33 tel qu'un moteur, logé dans le fond 1 de la caravane.

Le logement 13 peut faire l'objet de nombreuses variantes d'exécution ainsi qu'il sera décrit ci-après, dans le cas où les organes 10 sont associés aux panneaux 5 (mais qui peut être aussi étendu au cas des panneaux 6).

Suivant une première variante (figures 7 et 8) le logement 13 se présente sous la forme d'un creux ou entaille ou réserve, à l'intérieur même d'un panneau 4 s'étendant à partir du panneau 3 adjacent, limité, sur ses deux grandes faces planes et parallèles respectivement par les faces interne et externe du panneau. Le creux a en élévation une forme générale de V ou de pseudo V dont une première branche 34 est coplanaire à la face interne notamment inclinée du panneau 3 et dont la seconde branche 35 également inclinée est dirigée de bas en haut et d'une extrémité vers la partie médiane également inclinée de la caravane. Les deux branches 34 et 35 définissent à leur jonction une pointe 36 inférieure. Les parties extrêmes libres 37, 38 respectivement des branches 34 et 35 définissent l'ouverture supérieure du creux c'est-à-dire du logement 13. Cette ouverture est limitée sectoriellement ce qui n'affaiblit pas le panneau 4 et permet l'accrochage et l'assise du panneau 6 sur le chant horizontal supérieur de ce panneau 4. L'inclinaison de la branche 35 est telle qu'elle permet le logement de l'organe 10 lorsque la caravane est pliée (figure 8). L'axe 11 est porté soit par le panneau 3, soit par le panneau 4 notamment au voisinage par la pointe 36. Dans cette disposition particulière le fond 1 présente une ouverture supérieur avec des décrochements vers le bas à l'endroit des bords supérieurs des panneaux 4, c'est dire que le chants supérieurs des panneaux 4 sont placés en dessous des chants supérieurs des panneaux 3 de manière que les panneaux 6 soient au moins sensiblement juxtaposés et coplanaires placés en dessous des panneaux 5 lorsque la caravane est pliée.

. Suivant une forme d'exécution possible, il est prévu un profilé 39, notamment en U, dont l'âme 40 est fixée à la face interne du panneau 5. Ce profilé 39 s'étend à partir du bord 8a en direction du bord horizontal supérieur opposé du panneau 5 et est placé pour venir en regard de l'ouverture du logement 13 lorsque la caravane est pliée (figure 8). L'écartement entre les deux ailes 41 du profilé 39 correspond sensiblement à l'épaisseur du panneau 4 et du panneau 6 avec lequel, le profilé 39 vient en prolongement. L'organe 10 est placé au moins partiellement à sa partie supérieure dans le profilé 39 qui supporte notamment l'axe 12. Les bords libres longitudinaux 42 des ailes 41 sont écartés du chant vertical 43 en regard du panneau 6 de manière que le profilé 39 n'interfère pas avec ce panneau 6, en position verticale. Naturellement, entre dans le cadre de l'invention, toute autre forme de réalisation du profilé 39 notamment en deux cornières ou similaires ou encore d'une autre façon.

De manière plus générale, le profilé 39 est remplacé par tout organe approprié propre à réaliser un écartement satisfaisant entre les deux axes 11, 12, afin de favoriser l'action de l'organe 10 au moment de l'ouverture de la caravane, tout en permettant le logement dudit organe 10 au moins en ce qui concerne sa partie extérieure au logement 13.

Le bord libre de l'aile 41 peut venir en recouvrement sur la plaque rapportée 19 masquant le chanfrein 18.

La combinaison du logement 13 tel que décrit du chanfrein 18, de la plaque 19, du profilé 39 constitue un logement continu — que la caravane soit pliée ou totalement dépliée — réalisé dans l'épaisseur de la paroi même de la caravane, dans lequel est logé l'organe 10.

Dans une autre forme d'exécution de l'invention (figure 11) le logement tel que 13 est à proprement parler supprimé et l'organe 10 est associé à pivotement au fond 1 directement sur ou au voisinage du chant horizontal supérieur du panneau inférieur longitudinal 4.

Suivant une autre variante illustrée également par la figure 11, mais applicable aussi aux autres formes d'exécution déjà décrites, le chanfrein 18 et éventuellement la plaque 19 sont supprimés, ce qui est rendu possible par l'inclinaison donnée à l'organe 10 et par l'écartement existant entre le chant vertical 43 du panneau 6 et la face interne du panneau 3.

. Suivant une autre variante d'exécution (figure 10), le logement 13 associé au fond 1 est éventuellement totalement ou partiellement supprimé comme dit plus haut et l'organe 10 est au moins partiellement logé dans un logement 45 associé à un panneau supérieur notamment un panneau supérieur frontal 5. Dans cette forme d'exécution, le panneau 5 comprend une âme 46, bordée sur son chant vertical 47 par un profilé 48 réalisant un angle du panneau 5. Le profilé 48, notamment en métal ou en matière plastique comprend une première partie en U, 49, avec laquelle vient coopérer l'âme 46, cette coopération assurant une liaison rigide entre l'âme 46 et le profilé 48 et une seconde partie en U, 50, dont l'âme 51 vient dans le prolongement de l'aile extérieure de la première partie en U 49, cette seconde partie en U 50 constituant ledit logement 45, l'organe élastique 10 étant associé par l'axe 12 à l'âme 51. Par analogie aux dispositions décrites précédemment, l'aile externe 52 de la seconde partie en U 50 est plus grande que l'aile interne 53. L'organe 10 est par exemple associé au panneau 4 directement sur son chant horizontal supérieur. Le panneau 6 est éventuellement garni sur son chant 43 d'un profilé rapporté 54, ayant une forme générale de U renversé, comportant une aile 55 ayant une fonction correspondant à celle remplie par la plaque rapportée 19. Dans cette forme d'exécution, l'aile 52 et l'aile 53 ont une fonction indentique à celle remplie par l'aile 15 et l'aile 41 décrites précédemment. Cette disposition particulière permet notamment soit de supprimer le logement 13, comme décrit, soit de le limiter, soit d'incliner l'organe 10 pour augmenter son effet.

**Revendications**

1. Caravane pliante rigide à dépliage assisté du type comprenant un fond (1) porté par un chassis limité par un plancher (2) et quatre panneaux inférieurs (3, 4), quatre panneaux supérieurs (5, 6) mobiles respectivement à pivotement autour d'axes horizontaux (8, 9), placés soit substantiellement horizontalement dans l'ouverture supérieure du fond (1), soit substantiellement verticalement dans le prolongement du panneau inférieur (3, 4) correspondant respectivement lorsque la caravane est pliée ou totalement dépliee; un toit (7) reposant horizontalement soit sur le fond (1), soit sur les panneaux supérieurs (5, 6) respectivement lorsque la caravane est pliée ou totalement dépliée, associé cinématiquement aux panneaux supérieurs au moyen de galets (21) coopérant avec des glissières (23); au moins un et généralement plusieurs organes élastiques d'assistance unidirectionnels notamment des vérins pneumatiques (10) articulés chacun au fond (1) et à un panneau supérieur (5, 6) en vue de solliciter en permanence ce panneau à rotation dans le sens du dépliage de la caravane, caractérisée par le fait que chaque organe d'assistance (10) est placé en permanence au moins partiellement dans l'épaisseur même des panneaux limitant la caravane notamment des logements, gorges (13) ou chanfreins (18) creusés dans ce panneau et masqués vers l'extérieur et l'intérieur.

2. Caravane pliante selon la revendication 1, caractérisée par le fait qu'il est prévu au moins un logement ou gorge (13) dans l'épaisseur même d'un panneau du fond auquel est articulé l'organe d'assistance (10) s'étendant à partir du chant horizontal supérieur dudit panneau et permettant le logement au moins partiel de l'organe d'assistance (10).

3. Caravane selon les revendications 1 et 2, caractérisée par le fait qu'il est prévu dans un panneau supérieur auquel est articulé l'organe d'assistance (10), un logement (14, 45), au moins à l'endroit de cette articulation de l'organe d'assistance (10), et dans lequel est logé au moins partiellement ledit organe (10).

4. Caravane selon les revendications 1 à 3 caractérisée par le fait que les jeux existant entre les panneaux supérieurs frontaux et les panneaux supérieurs longitudinaux sont masqués vers l'extérieur et vers l'intérieur.

5. Caravane selon les revendications 1 à 4 caractérisée par le fait que les angles inférieurs des panneaux supérieurs auxquels ne sont pas associés les organes d'assistance (10) sont coupés par des chanfreins (18) permettant le passage des organes d'assistance.

6. Caravane selon la revendication 5 caractérisée par le fait qu'il est prévu des plaques ou similaires venant masquer de l'extérieur et/ou de l'intérieur les ouvertures créées par les chanfreins (18).

7. Caravane selon les revendications 1 à 6 caractérisée par le fait que les axes d'articulation des panneaux supérieurs auxquels les organes d'assistance (10) ne sont pas associés sont placés dans un plan horizontal situé à un niveau inférieur de celui des axes d'articulation des panneaux supérieurs auxquels sont associés les organes d'assistance (10).

8. Caravane selon les revendications 1 à 7 caractérisée par le fait que le logement (13) se présente sous la forme d'un creux dans un panneau inférieur, ayant une forme générale de V ou de pseudo V limité par une première branche (34) une seconde branche (35) définissant une pointe 36 à l'endroit ou au voisinage de laquelle se trouve l'axe (11), les parties extrêmes libres

(37, 38) des deux branches (34, 35) définissant l'ouverture du creux qui est sectorielle.

9. Caravane selon les revendications 1 à 8 caractérisée par le fait que le logement (45) est défini par une seconde partie en U (50) d'un profilé (48) ayant une première partie (49) avec laquelle coopère l'âme 46 du panneau auquel est associé l'organe d'assistance (10).

10. Caravane selon les revendications 1 à 9, caractérisée par le fait qu'il est prévu un profilé (39) associé rigidement au panneau supérieur auquel est associé l'organe d'assistance, dans lequel vient se loger au moins partiellement l'organe d'assistance (10) ayant au moins une aile (41) venant masquer l'ouverture existant entre les panneaux supérieurs.

11. Caravane selon les revendications 1 à 10, caractérisée par le fait que les bords libres horizontaux supérieurs (8*b*, 9*b*) du fond (1) sont coplanaires.

12. Caravane selon les revendications 1 à 11, caractérisée par le fait que le bord tombé longitudinal (25) du toit (7) est en appui sur le bord libre supérieur correspondant des panneaux inférieurs du fond (1).

13. Caravane selon les revendications 1 à 12, caractérisée par le fait qu'un organe d'assistance (10) est associé à un panneau supérieur frontal (5).

14. Caravane selon les revendications 1 à 12, caractérisée par le fait que les organes d'assistance (10) sont associés à un panneau supérieur longitudinal.

**Claims**

1. Rigid folding caravan with assisted opening-out of the type comprising a base (1) supported by a chassis defined by a floor (2) and four lower panels (3 and 4), four upper panels (5, 6) able to move respectively by pivoting about horizontal pivots (8, 9) located either substantially horizontally in the upper opening of the base (1), or substantially vertically as an extension of the corresponding lower panel (3, 4) respectively when the caravan is folded or completely opened out; a roof (7) resting horizontally either on the base (1), or on the upper panels (5, 6) respectively when the caravan is folded or completely opened out, associated kinematically with the upper panels by means of rollers (21) cooperating with guides (23); at least one and generally a plurality of elastically yielding uni-directional assisting members, in particular pneumatic jacks (10) each pivotally connected to the base (1) and to an upper panel (5, 6) in order to permanently urge this panel to rotate in the direction for opening out the caravan, characterised by the fact that each assisting member (10) is located permanently at least partially in the actual depth of the panels limiting the caravan, in particular housings, grooves (13) or chamfers (18) provided in this panel and covered from the outside and inside.

2. Folding caravan according to claim 1, characterised by the fact that at least one housing or groove (13) is provided in the actual depth of a panel of the base to which the assisting member (10) is pivotally connected, the housing or groove extending from the upper horizontal edge of said panel and facilitating the at least partial housing of the assisting member (10).

3. Caravan according to claims 1 and 2, characterised by the fact that provided in an upper panel to which the assisting member (10) is pivotally connected is a housing (14, 45), at least at the point of this pivotal connection of the assisting member (10) and in which said member (10) is housed at least partially.

4. Caravan according to claims 1 to 3, characterised by the fact that the clearances existing between the front upper panels and the longitudinal upper panels are covered on the outside and inside.

5. Caravan according to claims 1 to 4, characterised by the fact that the lower corners of the upper panels with which the assisting members (10) are not associated are cut by chamfers (18) facilitating the passage of the assisting members.

6. Caravan according to claim 5, characterised by the fact that plates or the like are provided covering from the outside and/or inside the openings created by the chamfers (18).

7. Caravan according to claims 1 to 6, characterised by the fact that the pivots for the upper panels with which the assisting members (10) are not associated are located in a horizontal plane situated at a level lower than that of the pivots for the upper panels with which the assisting members (10) are associated.

8. Caravan according to claims 1 to 7, characterised by the fact that the housing (13) is in the form of a recess in a lower panel, having a general V or pseudo V shape limited by a first side (34), a second side (35) defining a point (36) at the location of or in the vicinity of which the pivot (11) is located, the free end parts (37, 38) of the two sides (34, 35) defining the opening of the recess which is sectorial.

9. Caravan according to claims 1 to 8, characterised by the fact that the housing (45) is defined by a second U-shaped part (50) of a sectional member (48) having a first part (49) cooperating with which is the centre (46) of the panel with which the assisting member (10) is associated.

10. Caravan according to claims 1 to 9, characterised by the fact that a sectional member (39) is provided rigidly connected to the upper panel with which the assisting member is associated, in which the assisting member (10) is housed at least partially, the latter having at least one arm (41) covering the opening existing between the upper panels.

11. Caravan according to claims 1 to 10, characterised by the fact that the free upper horizontal edges (8b, 9b) of the base (1) are coplanar.

12. Caravan according to claims 1 to 11, characterised by the fact that the turned-down longitudinal edge (25) of the roof (7) bears on the corresponding free upper edge of the lower panels of the base (1).

13. Caravan according to claims 1 to 12, characterised by the fact that an assisting member (10) is associated with a front upper panel (5).

14. Caravan according to claims 1 to 12, characterised by the fact that the assisting members (10) are associated with a longitudinal upper panel.

**Patentansprüche**

1. Einklappbarer und selbsttätig wieder aufrichtbarer, starrer Wohnwagen, mit einem von einem Fahrgestell getragenen Grundteil, das von einem Boden (2) und vier unteren Wandteilen und vier oberen Wandteilen (5, 6) begrenzt ist, die um horizontale Achsen (8, 9) schwenkbar beweglich sind und die im wesentlichen horizontal in einer oberen Öffnung des Grundteils (1) und im wesentlichen vertikal in der Verlängerung des entsprechenden, unteren Wandteils (3, 4) angeordnet sind, wenn der Wohnwagen eingeklappt oder vollständig aufgerichtet ist mit einem Dach (7), das horizontal entweder auf dem Grundteil (1) oder auf den oberen Wandteilen (5, 6) ruht, wenn der Wohnwagen eingeklappt oder ganz aufgerichtet ist, und das eine kinematische Verbindung mit den oberen Wandteilen mittels mit Führungsschienen (23) zusammenwirkenden Rollen (21) aufweist, und mit mindestens einem, im allgemeinen mehreren einseitig gerichteten beweglichen Servoelementen, nämlich Pneumatik-Zylindern (10), von denen jeder am Grundteil (1) und an einem oberen Wandteil (5, 6) derart angelenkt ist, daß das Wandteil bezüglich der Rotation in Richtung der Aufrichtbewegung des Wohnwagens dauerd belastet ist, dadurch gekennzeichnet, daß jedes Servoelement (10) zumindest teilweise ständig innerhalb der Dickenabmessungen der Wandteile selbst, die den Wohnwagen begrenzen, angeordnet sind, nämlich von Gehäusebereichen, Nuten (13) oder Abschrägungen (18), die in diesem Wandteil vertieft sind und nach außen und innen abgedeckt sind.

2. Wohnwagen nach Anspruch 1, dadurch gekennzeichnet, daß mindestens ein Gehäusebereich oder Nut (13) innerhalb der Dickenabmessung eines Wandteils des Grundteils vorgesehen ist, in welchem das Servoelement (10) angelenkt ist, das sich bis zur horizontalen oberen Kante desselben Wandteils erstreckt und das Unterbringen des Servoelementes (10) zumindest teilweise ermöglicht.

3. Wohnwagen nach den Ansprüchen 1 und 2, dadurch gekennzeichnet, daß in einem oberen Wandteil, in dem das Servoelement (10) angelenkt ist, ein Gehäuse (14, 45) zumindest im Bereich dieser Anlenkung des Servoelementes (10) vorgesehen ist, und daß in diesem das Element (10) zumindest teilweise untergebracht ist.

4. Wohnwagen nach den Ansprüchen 1 bis 3, dadurch gekennzeichnet, daß die zwischen den oberen Frontwandteilen und den oberen Längswänden bestehenden Spalte nach außen und nach innen hin abgedeckt sind.

5. Wohnwagen nach den Ansprüchen 1 bis 4, dadurch gekennzeichnet, daß die unteren Ecken der oberen Wandteile, in denen keine Servoelemente (10) angeordnet sind, durch Abschrägungen (18) ausgeschnitten sind, die einen Durchgang der Servoelemente ermöglichen.

6. Wohnwagen nach Anspruch 5, dadurch gekennzeichnet, daß Platten oder ähnliches vorgesehen sind, die von außen und/oder von innen die durch die Abschrägungen (18) gebildeten Öffnungen abdecken.

7. Wohnwagen nach den Ansprüchen 1 bis 6, dadurch gekennzeichnet, daß die Schwenkachsen der oberen Wandteile, denen keine Servoelemente (10) zugeordnet sind, in einer horizontalen Ebene angeordnet sind, die in einer bezüglich der Schwenkachsen der oberen Wände unteren Ebene, denen die Servoelemente (10) zugeordnet sind, angeordnet ist.

8. Wohnwagen nach den Ansprüchen 1 bis 7, dadurch gekennzeichnet, daß das Gehäuse (13) in der Form einer Hohlkehle im unteren Wandteil gebildet ist, die eine im wesentlichen V- oder pseudo V-Form besitzt, die durch einen ersten Arm (34) und einen zweiten Arm (35) begrenzt ist, die einen Punkt (36) im Bereich oder in der Nähe, wo sich die Achse (11) befindet, definieren, wobei die äußeren freien Enden (37, 38) der beiden Arme (34, 35) die Öffnung der sektorförmigen Hohlkehle definieren.

9. Wohnwagen nach den Ansprüchen 1 bis 8, dadurch gekennzeichnet, daß das Gehäuse (45) durch ein zweites U-förmiges Teil (50) eines Profils (48) definiert ist, das ein erstes Teil (49) besitzt, mit dem ein Steg (46) des Wandteils zusammenwirkt, dem das Servoelement (10) zugeordnet ist.

10. Wohnwagen nach den Ansprüchen 1 bis 9, dadurch gekennzeichnet, daß ein Profil (39) vorgesehen ist, das mit dem oberen Wandteil starr verbunden ist, dem das Servoelement zugeordnet ist, in dem das Servoelement (10) zumindest teilweise untergebracht ist, und das mindestens einen Flügel (41) besitzt, der die zwischen den oberen Wandteilen bestehende Öffnung abdeckt.

11. Wohnwagen nach den Ansprüchen 1 bis 10, dadurch gekennzeichnet, daß die freien horizontalen oberen Ränder (8b, 9b) des Grundteils (1) in einer Ebene liegen.

12. Weohnwagen nach den Ansprüchen 1 bis 11, dadurch gekennzeichnet, daß der nach unten zeigende Längsrand (25) des Daches (7) sich auf dem entsprechenden freien oberen Rand der unteren Wandteile des Grundteils (1) abstützt.

13. Wohnwagen nach den Ansprüchen 1 bis 12, dadurch gekennzeichnet, daß ein Servoelement (10) einem oberen Frontwandteil (5) zugeordnet ist.

14. Wohnwagen nach den Ansprüchen 1 bis 12, dadurch gekennzeichnet, daß die Servoelemente (10) einem oberen längsverlaufenden Wandteil zugeordnet sind.

**0012077**

FIG.4

FIG.1B          FIG.1A

0 012 077

FIG.3

FIG.5

FIG.2

FIG.6

2

FIG. 7

FIG. 8

0012077

FIG. 9

FIG. 10

VII

5

40

12
41
39
43
42

41
10

15

36
19
11
18

6

38

4

VII

51   48   49   46

12

50

45

52

11

5

47

10
53

55

43

54

6

0012077

4

FIG. 11